# EUROPÄISCHE PATENTSCHRIFT

(11) **EP 3 251 177 B1**
(45) Veröffentlichungstag und Bekanntmachung des Hinweises auf die Patenterteilung: **11.03.2020**
(21) Anmeldenummer: 15797644.0
(22) Anmeldetag: 17.11.2015
(51) Int. Cl.: H01R 13/52, H01R 13/627, B60L 53/16

(54) **STECKVERBINDER**
PLUG
CONNECTEUR ENFICHABLE

(30) Priorität: 29.01.2015 DE 102015101265
(43) Veröffentlichungstag der Anmeldung: 06.12.2017
(73) Patentinhaber: Phoenix Contact e-Mobility GmbH, 32816 Schieder-Schwalenberg (DE)
(72) Erfinder: MOSEKE, Dirk, 37671 Höxter-Lüchtringen (DE)
(74) Vertreter: Janke, Christiane
(86) Internationale Anmeldenummer: PCT/EP2015/076830
(87) Internationale Veröffentlichungsnummer: WO 2016/119941

(56) Entgegenhaltungen:
- EP-A1- 2 806 508
- WO-A1-2005/101583
- JP-A- 2014 179 192
- US-A1- 2009 111 313
- US-A1- 2012 064 755
- US-A1- 2013 157 485

## Beschreibung

Die Erfindung betrifft einen Steckverbinder, insbesondere einen Ladesteckverbinder.

Steckverbinder, insbesondere Ladesteckverbinder, zum Laden von Elektrofahrzeugen, welche über ein Kabel mit einer Ladestation verbunden sind, weisen üblicherweise ein Verriegelungselement auf, mittels welchem der Steckverbinder mit einem Gegensteckverbinder, welcher fahrzeugseitig oder an einer Ladestation angeordnet sein kann, verbindbar bzw. an diesem befestigbar ist. Das Verriegelungselement ist vorzugsweise in Form eines Hebels ausgebildet. Beim Stecken des Steckverbinders wird das Verriegelungselement geöffnet und rastet selbsttätig in eine Gegenkontur des Gegensteckverbinders ein. Das Lösen des eingerasteten Verriegelungselements erfolgt üblicherweise durch Aufbringen eines Drucks auf das hintere, von dem Steckgesicht entfernte Ende des Verriegelungselements, wodurch das vordere Ende des Verriegelungselements, an welchem ein Rasthaken zum Einrasten des Verriegelungselements an den Gegensteckverbinder ausgebildet ist, gegen den Druck einer Feder aufgehebelt werden kann, so dass das Verriegelungselement aus seiner Verrastung gelöst werden kann und damit der gesamte Steckverbinder von dem Gegensteckverbinder entfernt bzw. abgezogen werden kann.

Bei den bisher bekannten Steckverbindern ist das Verriegelungselement meist vollständig in dem Gehäuse des Steckverbinders gelagert, so dass das Verriegelungselement bis auf das vordere Ende des Verriegelungselements mit dem Rasthaken und bis auf einen Bedienpunkt am hinteren Ende des Verriegelungselements an allen seinen Seitenflächen vollständig von dem Gehäuse umschlossen ist, so dass das Verriegelungselement von dem Gehäuse überdeckt ist.

Hierdurch weist der Steckverbinder jedoch eine unerwünscht große Baugröße auf.

Ferner sind Steckverbinder bekannt, bei welchen das Verriegelungselement nicht in das Gehäuse des Steckverbinders integriert ist, sondern das Verriegelungselement freiliegend an der Oberseite des Gehäuses des Steckverbinders angeordnet ist. Derartig angeordnete Verriegelungselemente weisen jedoch meist keinen ausreichenden Schutz gegen widrige Umwelteinflüsse, wie Schmutz und/oder Wasser, welches bei niedrigen Umgebungstemperaturen gefrieren kann, auf. Dringt Schmutz und/oder Wasser in einen Fügespalt zwischen dem Verriegelungselement und dem Gehäuse ein, kann die Funktionsfähigkeit des Verriegelungselements gestört werden. Gefriert das in dem Fügespalt befindliche Wasser ist eine Schwenkbewegung des Verriegelungselements nicht mehr möglich, so dass der Steckverbinder nicht mehr von dem Gegensteckverbinder gelöst werden kann.

US2012064755 A1 offenbart den Oberbegriff des Anspruchs 1.

Der Erfindung liegt daher die Aufgabe zugrunde, einen Steckverbinder zur Verfügung zu stellen, bei welchem die Funktionsfähigkeit des Verriegelungselements auch bei widrigen Umwelteinflüssen sicher gewährleistet werden kann. Die Lösung der erfindungsgemäßen Aufgabe erfolgt mit den Merkmalen des unabhängigen Anspruchs. Vorteilhafte Ausgestaltungen und zweckmäßige Weiterbildungen der Erfindung sind in den Unteransprüchen angegeben.

Der Steckverbinder gemäß der Erfindung weist ein Gehäuse, ein an dem Gehäuse schwenkbeweglich gelagertes Verriegelungselement, mittels welchem der Steckverbinder an einem Gegensteckverbinder befestigbar ist, und ein Dichtungselement, welches zwischen dem Verriegelungselement und dem Gehäuse angeordnet ist, auf, wobei das Dichtungselement einen ersten Befestigungsbereich zum Befestigen des Dichtungselements an dem Verriegelungselement und einen zweiten Befestigungsbereich zum Befestigen des Dichtungselements an dem Gehäuse aufweist, wobei das Dichtungselement zwischen dem ersten Befestigungsbereich und dem zweiten Befestigungsbereich einen elastisch verformbaren Verbindungsbereich aufweist, mittels welchem bei einer Schwenkbewegung des Verriegelungselements der erste Befestigungsbereich relativ zu dem zweiten Befestigungsbereich bewegbar ist, wobei der Verbindungsbereich des Dichtungselements U-förmig ausgebildet ist.

Der erfindungsgemäße Steckverbinder weist nunmehr zwischen dem Verriegelungselement und dem Gehäuse ein Dichtungselement auf, wobei dieses Dichtungselement vorzugsweise innerhalb eines zwischen dem Verriegelungselement und dem Gehäuse ausgebildeten Fügespalts angeordnet ist. Das Dichtungselement ist somit vorzugsweise in einem Bereich des Steckverbinders angeordnet, bei welchem das Verriegelungselement angrenzend zu dem Gehäuse angeordnet ist. Mittels des Dichtungselements kann das Eindringen von Schmutz und/oder Wasser zwischen dem Verriegelungselement und dem Gehäuse verhindert werden, so dass auch ein Festfrieren des Verriegelungselements durch zwischen dem Verriegelungselement und dem Gehäuse eingedrungenes und gefrorenes Wasser verhindert werden kann. Der Steckverbinder ist dadurch gegen widrige Umwelteinflüsse geschützt, so dass eine Funktionsfähigkeit des Steckverbinders zu jeder Zeit gewährleistet werden kann. Der Steckverbinder weist dadurch eine hohe Funktionssicherheit insbesondere in Bezug auf das Verriegeln des Steckverbinders mit einem Gegensteckverbinder und auch in Bezug auf ein Lösen des Steckverbinders von dem Gegensteckverbinder auf.

Das Dichtungselement ist derart ausgebildet, dass es sowohl an dem Gehäuse als auch an dem Verriegelungselement befestigt ist. Dafür weist das Dichtungselement sowohl einen in Richtung des Gehäuses ausgebildeten Befestigungsbereich als auch eine in Richtung des Verriegelungselements ausgebildeten Befestigungsbereich auf. Da das Dichtungselement zwischen dem Gehäuse und dem Verriegelungselement ausgebildet ist, sind die beiden Befestigungsbereiche vorzugsweise sich gegenüberliegend angeordnet.

Um trotz der sicheren Befestigung des Dichtungselements sowohl an dem Gehäuse als auch dem Verriegelungselement eine hohe Flexibilität des Dichtungselements gewährleisten zu können, wenn das Verriegelungselement in eine verriegelte Position und in eine gelöste Position verschwenkt wird, weist das Dichtungselement zwischen den beiden Befestigungsbereichen einen elastisch verformbaren Verbindungsbereich auf. Durch diesen elastisch verformbaren Verbindungsbereich können die beiden Befestigungsbereiche relativ zueinander bewegt werden, wenn eine Schwenkbewegung des Verriegelungselements erfolgt. Das Dichtungselement kann dadurch der Schwenkbewegung des Verriegelungselements folgen, ohne seine Dichtwirkung zu verlieren, so dass das Dichtungselement das Verriegelungselement in seiner Bewegungsfreiheit nicht behindert, sondern der Bewegung des Verriegelungselements folgen kann und gleichzeitig eine dabei eine konstante Abdichtwirkung gewährleisten kann.

Das Dichtungselement ist vorzugsweise an quer zu der Oberseite und der Unterseite des Verriegelungselements ausgebildeten Seitenflächen des Verriegelungselements, welche einer Wandung des Gehäuses gegenüberliegen, angeordnet, so dass insbesondere die Oberseite des Verriegelungselements zum Betätigen des Verriegelungselements frei liegt. Das Dichtungselement ist vorzugsweise umlaufend um das Verriegelungselement angeordnet, insbesondere umlaufend entlang der Seitenflächen des Verriegelungselements, welche benachbart zu einer Wandung des Gehäuses angeordnet sind, angeordnet, so dass ein direkter Kontakt zwischen dem Gehäuse und dem Verriegelungselement nicht mehr gegeben ist, sondern nur ein Kontakt zwischen Verriegelungselement und Dichtungselement und zwischen Dichtungselement und Gehäuse. Das Dichtungselement erstreckt sich jedoch vorzugsweise nicht über die gesamte Länge des Verriegelungselements, sondern nur über eine Teillänge des Verriegelungselements, dort wo das Verriegelungselement mit seinen Seitenflächen einer Wandung des Gehäuses unmittelbar gegenüberliegt. Das vordere Ende des Verriegelungselements, welches über das Gehäuse hinausragt und an welchem der Rasthaken angeordnet ist, ist frei von dem Dichtungselement, d. h. dass das Dichtungselement hier nicht mehr angeordnet ist. Durch eine umlaufende Anordnung des Dichtungselements entlang der Außenumfangsfläche des Verriegelungselements kann das Verriegelungselement zu allen Seiten in Richtung des Gehäuses hin mittels des Dichtungselements abgedichtet sein.

Um eine besonders gute Beweglichkeit des Dichtungselements in seinem elastisch verformbaren Verbindungsbereich ausbilden zu können, ist vorgesehen dass der Verbindungsbereich des Dichtungselements U-förmig ausgebildet ist. Durch die U-förmige Ausbildung des Verbindungsbereiches kann bei einer Schwenkbewegung des Verriegelungselements das Dichtungselement im Bereich seines Verbindungsbereiches eine Abrollbewegung ausführen, so dass eine besonders gute relative Beweglichkeit zwischen den beiden Befestigungsbereichen des Dichtungselements gegeben werden kann. Die Flexibilität des Dichtungselements im Bereich des Verbindungsbereiches kann durch die U-förmige Ausgestaltung somit erhöht werden.

Zur Befestigung des Dichtungselements an dem Verriegelungselement ist es bevorzugt vorgesehen, dass der erste Befestigungsbereich mindestens einen Steg aufweist, welcher in eine an dem Verriegelungselement ausgebildete Aufnahmenut eingreift. Durch die Ausbildung eines Steges an dem Befestigungsbereich und Eingreifen dieses Steges in eine Aufnahmenut an dem Verriegelungselement kann eine formschlüssige Verbindung zwischen dem Dichtungselement und dem Verriegelungselement ausgebildet werden. Der erste Befestigungsbereich und damit der mindestens eine Steg des ersten Befestigungsbereichs erstreckt sich vorzugsweise über die gesamte Innenumfangsfläche des Dichtungselements, welche in Richtung des Verriegelungselements gerichtet ist. Der Befestigungsbereich kann dabei auch mehr als einen Steg aufweisen, so dass bei einer Anordnung von zwei oder mehr Stegen, welche vorzugsweise übereinander an dem Dichtungselement, insbesondere der Innenumfangsfläche des Dichtungselements, angeordnet sind, die Befestigung des Dichtungselements an dem Verriegelungselement besonders sicher ausgebildet werden kann. Bei zwei oder mehr Stegen des ersten Befestigungsbereichs sind an dem Verriegelungselement auch zwei oder mehr Aufnahmenuten ausgebildet, wobei die Anzahl der Aufnahmenuten der Anzahl der Stege entspricht, da vorzugsweise jedem Steg eine Aufnahmenut zugeordnet ist. Weiter ist es auch möglich, dass der Steg und die Aufnahmenut umgekehrt ausgebildet sind, indem an dem Dichtungselement als erster Befestigungsbereich mindestens eine Aufnahmenut ausgebildet ist und an dem Verriegelungselement mindestens ein Steg ausgebildet ist, so dass ein an dem Verriegelungselement ausgebildeter Steg in eine an dem Dichtungselement ausgebildete Aufnahmenut eingreifen kann.

Zur Befestigung des Dichtungselements an dem Gehäuse kann es weiter bevorzugt vorgesehen sein, dass der zweite Befestigungsbereich mindestens einen Steg aufweist, welcher in eine an dem Gehäuse ausgebildete Aufnahmenut eingreift. Der zweite Befestigungsbereich und damit der mindestens eine Steg des zweiten Befestigungsbereichs erstreckt sich vorzugsweise über die gesamte Außenumfangsfläche des Dichtungselements, welche in Richtung des Gehäuses gerichtet ist. Auch hier kann durch die Verbindung des Dichtungselements mit dem Gehäuse über einen Steg, welcher in eine Aufnahmenut eingreift, eine formschlüssige Verbindung zwischen dem Dichtungselement und dem Gehäuse ausgebildet werden. Zudem kann es auch hier vorgesehen sein, dass der Steg und die Aufnahmenut umgekehrt ausgebildet sind, indem an dem Dichtungselement als zweiter Befestigungsbereich mindestens eine Aufnahmenut ausgebildet ist und an dem Gehäuse mindestens ein Steg ausgebildet ist, so dass mindestens ein Steg des Gehäuses in eine Aufnahmenut des zweiten Befestigungsbereichs des Dichtungselements eingreifen kann, um eine formschlüssige Verbindung zwischen Dichtungselement und Gehäuse ausbilden zu können.

Besonders bevorzugt ist es hierbei vorgesehen, dass der zweite Befestigungsbereich einen ersten Steg und einen unterhalb des ersten Steges angeordneten zweiten Steg aufweist, wobei der erste Steg in eine erste an dem Gehäuse ausgebildete Aufnahmenut und der zweite Steg in eine zweite an dem Gehäuse ausgebildete Aufnahmenut eingreift. Hierdurch kann eine besonders sichere Befestigung des Dichtungselements an dem Gehäuse ausgebildet werden, so dass ein Lösen des Dichtungselements von dem Gehäuse und/oder dem Verriegelungselement bei einer Bewegung des Verriegelungselements besonders sicher verhindert werden kann. Auch hier ist eine umgekehrte Ausbildung möglich, indem an dem Gehäuse ein erster Steg und ein unterhalb des ersten Steges angeordneter zweiter Steg angeordnet ist und der zweite Befestigungsbereich eine erste Aufnahmenut und eine zweite Aufnahmenut aufweist, wobei die an dem Gehäuse ausgebildeten Stege dann jeweils in einer Aufnahmenut des zweiten Befestigungsbereichs des Dichtungselements eingreifen.

Um eine Bewegungsfreiheit des Verriegelungselements zur Ausführung seiner Schwenkbewegung besonders sicher gewährleisten zu können, ist es vorzugsweise vorgesehen, dass das Dichtungselement beabstandet zu einer an dem Verriegelungselement ausgebildeten Lagerachse an dem Verriegelungselement angeordnet ist. Die Lagerachse des Verriegelungselements, welche vorzugsweise innerhalb des Gehäuses drehbar gelagert ist, ist damit unterhalb des Dichtungselements angeordnet, so dass auch die Lagerachse mittels des Dichtungselements vor widrigen Umwelteinflüssen, wie Schmutz und/oder Wasser, geschützt werden kann. Zudem kann durch die beabstandete Anordnung des Dichtungselements zu der Lagerachse des Verriegelungselements die Flexibilität des Dichtungselements beim Folgen des Dichtungselements der Bewegung des Verriegelungselements sicher gewährleistet werden.

Die Verwendung des zuvor beschriebenen Steckverbinders ist vorzugsweise zum Laden eines Elektrofahrzeugs vorgesehen.

Nachfolgend wird die Erfindung unter Bezugnahme auf die anliegenden Zeichnungen anhand einer bevorzugten Ausführungsform näher erläutert.

Es zeigen:
- Fig. 1: eine schematische Darstellung eines Steckverbinders gemäß der Erfindung,
- Fig. 2: eine schematische Darstellung eines Verriegelungselements mit einem daran angeordneten Dichtungselement eines wie in Fig. 1 gezeigten Steckverbinders gemäß der Erfindung,
- Fig. 3: eine schematische Darstellung eines wie in Fig. 1 und 2 gezeigten Dichtungselementes, und
- Fig. 4: eine schematische Darstellung eines Ausschnitts des in Fig. 1 gezeigten Steckverbinders in Form einer Schnittdarstellung entlang der in Fig. 1 gezeigten Linie A-A.

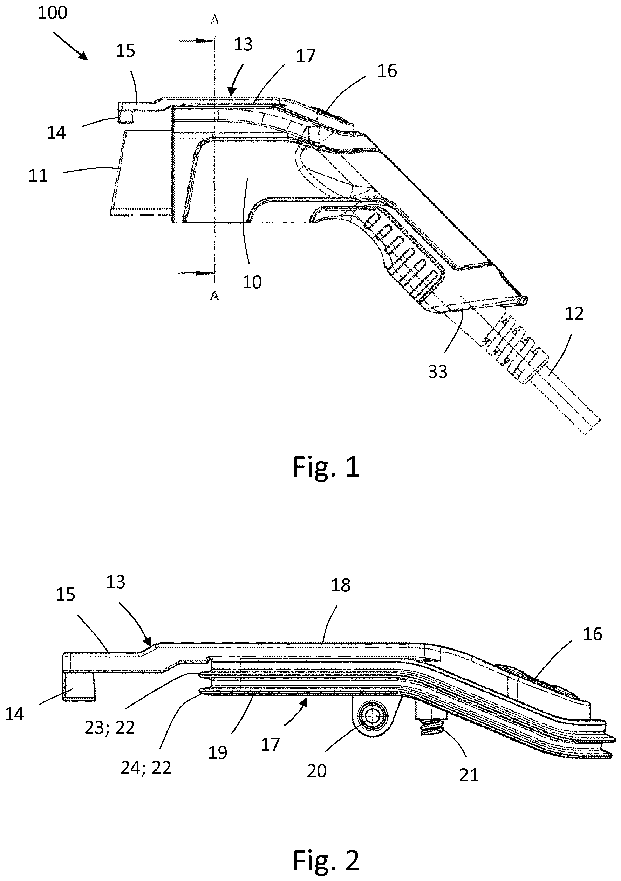

In Fig. 1 ist ein Steckverbinder 100 gezeigt, welcher insbesondere zum Laden eines Elektrofahrzeuges geeignet ist. Der Steckverbinder 100 weist ein Gehäuse 10 auf, an dessen einen Ende ein Steckgesicht 11 ausgebildet ist, an welchem mehrere, hier nicht gezeigte, Kontaktelemente angeordnet sind. Über das Steckgesicht 11 kann der Steckverbinder 100 mit einem hier nicht gezeigten Gegensteckverbinder elektrisch leitend kontaktiert werden, welcher fahrzeugseitig oder an einer Ladestation angeordnet sein kann. An einem dem Steckgesicht 11 gegenüberliegenden Ende des Steckverbinders 100 weist das Gehäuse 10 des Steckverbinders 100 eine Einführungsöffnung 33 zum Einführen eines Kabels 12 in den Steckverbinder 100 auf.

Der Steckverbinder 100 weist ferner ein an dem Gehäuse 10 schwenkbeweglich gelagertes Verriegelungselement 13 auf. Mittels des Verriegelungselements 13 kann der Steckverbinder 100 an dem Gegensteckverbinder befestigt, insbesondere verriegelt werden. Das Verriegelungselement 13 ist in Form eines Hebels ausgebildet und weist an seinem vorderen Ende 15, welches über das Gehäuse 10 hinausragt, einen Rasthaken 14 zum Hinterrasten an dem Gegensteckverbinder auf. An dem dem Rasthaken 14 gegenüberliegenden hinteren Ende 16 des Verriegelungselementes 13 kann das Verriegelungselement 13 von einem Benutzer durch Aufbringen einer Druckkraft betätigt werden, um das Verriegelungselement 13 derart zu verschwenken, dass das Verriegelungselement 13 mittels des Rasthakens 14 an einem Gegensteckverbinder einrastet oder von diesem gelöst wird. Das Verriegelungselement 13 ist an einer Oberseite des Steckverbinders 100 angeordnet, indem das Verriegelungselement 13 in einer an dem Gehäuse 10 ausgebildeten Ausnehmung derart eingesetzt ist, dass das Verriegelungselement 13 eine Außenfläche des Steckverbinders 100 mit ausbildet. Das Verriegelungselement 13 ist somit nicht von dem Gehäuse 10 überdeckt.

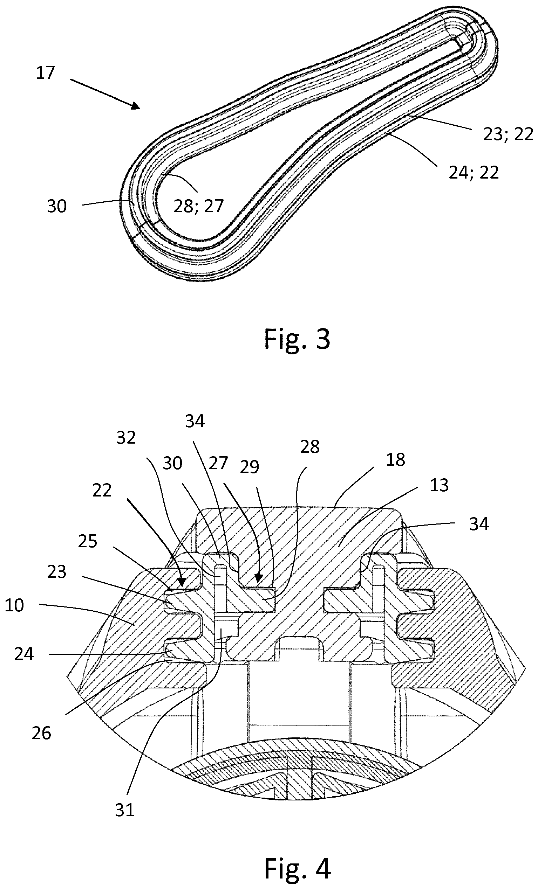

Zwischen dem Verriegelungselement 13 und dem Gehäuse 10 ist ein Dichtungselement 17 angeordnet, wobei das Dichtungselement 17 in einem Fügespalt 31 zwischen dem Verriegelungselement 13 und dem Gehäuse 10 angeordnet ist, wie insbesondere auch in Fig. 4 gezeigt ist. An dem Bereich, insbesondere dem vorderen Ende 15, des Verriegelungselements 13, welches über das Gehäuse 10 hinausragt, ist das Dichtungselement 17 nicht angeordnet. Das Dichtungselement 17 erstreckt sich nur über die Bereiche des Verriegelungselements 13, welche unmittelbar angrenzend bzw. gegenüberliegend zu dem Gehäuse 10 angeordnet sind.

Das Dichtungselement 17 ist aus einem elastomeren Material, insbesondere einem Gummimaterial ausgebildet.

In Fig. 2 ist das Verriegelungselement 13 mit dem daran angeordneten Dichtungselement 17 gezeigt. Das Dichtungselement 17 ist an den quer zu der Oberseite 18 und der Unterseite 19 des Verriegelungselements 13 ausgebildeten Seitenflächen 34, die unmittelbar gegenüberliegend zu dem Gehäuse 10 gerichtet sind, wie in Fig. 4 zu erkennen ist, angeordnet, so dass sowohl die Oberseite 18 als auch die Unterseite 19 des Verriegelungselements 13 frei liegen und nicht von dem Dichtungselement 17 überdeckt sind. Das Dichtungselement 17 erstreckt sich dabei nicht über die gesamte Länge des Verriegelungselements 13, sondern nur über einen Teilbereich der Länge des Verriegelungselements 13, wobei das Dichtungselement 17 dort angeordnet ist, wo das Verriegelungselement 13 von dem Gehäuse 10 umschlossen ist. An dem vorderen Ende 15 des Verriegelungselements 13, an welchem der Rasthaken 14 ausgebildet ist und welcher das Steckgesicht 11 bzw. die Steckkontur des Steckverbinders 100 überlappt, ist das Dichtungselement 17 nicht angeordnet. Das Dichtungselement 17 erstreckt sich somit über ungefähr Dreiviertel der Länge des Verriegelungselements 13.

An der Unterseite 19 des Verriegelungselements 13 sind eine Lagerachse 20 und eine Feder 21 angeordnet, wobei sowohl die Lagerachse 20 als auch die Feder 21 beabstandet zu dem Dichtungselement 17 angeordnet sind, so dass eine Beeinflussung der Funktionsfähigkeit der Lagerachse 20 und der Feder 21 durch das Dichtungselement 17 verhindert werden kann. Mittels der Lagerachse 20 ist das Verriegelungselement 13 schwenkbeweglich an dem Gehäuse 10 gelagert. Mittels der Feder 21 ist eine federnde Lagerung des Verriegelungselements 13 ermöglicht, so dass bei einer Betätigung des Verriegelungselements 13 durch Aufbringen eines Drucks auf die Oberseite 18 im Bereich des hinteren Endes 16 des Verriegelungselements 13 das Verriegelungselement 13 derart verschwenkt werden kann, dass der Rasthaken 14 an einem Gegensteckverbinder einrastet bzw. aus seiner Verrastung gelöst werden kann. Durch Aufbringen einer Druckkraft und Verschwenken des Verriegelungselements 13 wird die Feder 21 komprimiert.

In Fig. 2 ist ferner ein Befestigungsbereich 22 des Dichtungselements 17, im Weiteren als zweiter Befestigungsbereich 22 bezeichnet, zu erkennen, mittels welchem das Dichtungselement 22 an dem Gehäuse 10 befestigt werden kann. Der zweite Befestigungsbereich 22 des Dichtungselements 17 ist an der Außenumfangsfläche des Dichtungselements 17 ausgebildet, welche in Richtung des Gehäuses 10 zeigt. Der zweite Befestigungsbereich 22 weist hier einen ersten Steg 23 bzw. und einen unterhalb des ersten Stegs 23 angeordneten zweiten Steg 24 auf, wobei der erste Steg 23 und der zweite Steg 24 jeweils in eine an dem Gehäuse 10 ausgebildete Aufnahmenut 25, 26, welche ebenfalls übereinander bzw. untereinander angeordnet sind, ausgebildet sind, wie insbesondere in Figur 4 gezeigt ist. Hierdurch kann eine formschlüssige Verbindung zwischen dem Dichtungselement 17 und dem Gehäuse 10 ausgebildet werden. Die Stege 23, 24 sind jeweils rippenförmig an dem Dichtungselement 17 ausgebildet.

In Fig. 3 ist das Dichtungselement 17 für sich alleine gezeigt, wobei hierbei zu erkennen ist, dass das Dichtungselement 17 an seiner Innenumfangsfläche einen weiteren, ersten Befestigungsbereich 27 aufweist, wobei der erste Befestigungsbereich 27 ebenfalls einen Steg 28 aufweist, welcher in eine an dem Verriegelungselement 13 ausgebildete Aufnahmenut 29 eingreifen kann, wie dies in Fig. 4 gezeigt ist. Der Steg 28 bzw. der erste Befestigungsbereich 27 ist an der Innenumfangsfläche des Dichtungselements 17 umlaufend angeordnet. Der Steg 28 ist rippenförmig an dem Dichtungselement 17 ausgebildet.

Wie in Fig. 3 zu erkennen ist, ist der erste Befestigungsbereich 27 gegenüberliegend zu dem zweiten Befestigungsbereich 22, mittels welchem das Dichtungselement 17 an dem Gehäuse 10 befestigt werden kann, angeordnet. Der erste Steg 28 des ersten Befestigungsbereiches 27 ist hier auf der gleichen Höhe wie der erste Steg 23 des zweiten Befestigungsbereiches 22 angeordnet.

Zwischen dem ersten Befestigungsbereich 27 und dem zweiten Befestigungsbereich 22 ist ein elastisch verformbarer Verbindungsbereich 30 ausgebildet, welcher sich, wie in Fig. 3 zu erkennen ist, quer zu den Stegen 23, 24, 28 der Befestigungsbereiche 27, 22 erstreckt. Der Verbindungsbereich 30 ist, wie in Fig. 4 zu erkennen ist, im Querschnitt U-förmig ausgebildet, so dass durch den U-förmig ausgebildeten Verbindungsbereich 30 das Dichtungselement 17 eine hohe Flexibilität aufweisen kann, insbesondere wenn das Verriegelungselement 13 geschwenkt wird, so dass bei einer Schwenkbewegung des Verriegelungselements 13 der erste Befestigungsbereich 27 zusammen mit dem Verriegelungselement 13 nach oben bzw. nach unten geschwenkt werden kann und damit relativ zu dem zweiten Befestigungsbereich 22, welcher in einer festen Position an dem Gehäuse 10 angeordnet ist, bewegt werden kann. Durch die U-förmige Ausgestaltung des Verbindungsbereiches 30 des Dichtungselements 17 ist zwischen den beiden Befestigungsbereichen 27, 22 ein Spalt 32 ausgebildet, so dass keine direkte Berührung zwischen den beiden Befestigungsbereichen 27, 22 ausgebildet ist.

Um eine umlaufende Dichtwirkung erzielen zu können, ist das Dichtungselement 17, wie in Fig. 3 zu erkennen ist, im Wesentlichen ovalförmig ausgebildet, wobei die beiden Enden des Dichtungselementes 17 einstückig miteinander verbunden sind.

**Bezugszeichenliste**

| | |
|---|---|
| Steckverbinder | 100 |
| Gehäuse | 10 |
| Steckgesicht | 11 |
| Kabel | 12 |
| Verriegelungselement | 13 |
| Rasthaken | 14 |
| Vorderes Ende | 15 |
| Hinteres Ende | 16 |
| Dichtungselement | 17 |
| Oberseite | 18 |
| Unterseite | 19 |
| Lagerachse | 20 |
| Feder | 21 |
| Befestigungsbereich | 22 |
| Steg | 23 |
| Steg | 24 |
| Aufnahmenut | 25 |
| Aufnahmenut | 26 |
| Befestigungsbereich | 27 |
| Steg | 28 |
| Aufnahmenut | 29 |
| Verbindungsbereich | 30 |
| Fügespalt | 31 |
| Spalt | 32 |
| Einführungsöffnung | 33 |
| Seitenfläche | 34 |

## Patentansprüche

1. Steckverbinder (100), mit
einem Gehäuse (10),
einem an dem Gehäuse (10) schwenkbeweglich gelagerten Verriegelungselement (13), mittels welchem der Steckverbinder (100) an einem Gegensteckverbinder befestigbar ist, und
einem Dichtungselement (17), welches zwischen dem Verriegelungselement (13) und dem Gehäuse (10) angeordnet ist,
**dadurch gekennzeichnet, dass** das Dichtungselement (17) einen ersten Befestigungsbereich (27) zum Befestigen des Dichtungselements (17) an dem Verriegelungselement (13) und einen zweiten Befestigungsbereich (22) zum Befestigen des Dichtungselements (17) an dem Gehäuse (10) aufweist,
wobei das Dichtungselement (17) zwischen dem ersten Befestigungsbereich (27) und dem zweiten Befestigungsbereich (22) einen elastisch verformbaren Verbindungsbereich (30) aufweist, mittels welchem bei einer Schwenkbewegung des Verriegelungselements (13) der erste Befestigungsbereich (27) relativ zu dem zweiten Befestigungsbereich (22) bewegbar ist, wobei der Verbindungsbereich (30) des Dichtungselements (17) U-förmig ausgebildet ist.

2. Steckverbinder (100) nach Anspruch 1, **dadurch gekennzeichnet, dass** der erste Befestigungsbereich (27) mindestens einen Steg (28) aufweist, welcher in eine an dem Verriegelungselement (13) ausgebildete Aufnahmenut (29) eingreift.

3. Steckverbinder (100) nach Anspruch 1 oder 2, **dadurch gekennzeichnet, dass** der zweite Befestigungsbereich (22) mindestens einen Steg (23, 24) aufweist, welcher in eine an dem Gehäuse (10) ausgebildete Aufnahmenut (25, 26) eingreift.

4. Steckverbinder (100) nach Anspruch 3, **dadurch gekennzeichnet, dass** der zweite Befestigungsbereich (22) einen ersten Steg (23) und einen unterhalb des ersten Stegs (23) angeordneten zweiten Steg (24) aufweist, wobei der erste Steg (23) in eine erste an dem Gehäuse (10) ausgebildete Aufnahmenut (25) und der zweite Steg (24) in eine zweite an dem Gehäuse (10) ausgebildete Aufnahmenut (26) eingreift.

5. Steckverbinder (100) nach einem der Ansprüche 1 bis 4, **dadurch gekennzeichnet, dass** das Dichtungselement (17) beabstandet zu einer an dem Verriegelungselement (13) ausgebildeten Lagerachse (20) an dem Verriegelungselement (13) angeordnet ist.

## Claims

1. Plug connector (100), comprising
a housing (10),
a latching element (13), which is pivotably supported on the housing (10) and with which the plug connector (100) is attachable to a mating plug connector, and
a sealing element (17), which is arranged between the latching element (13) and the housing (10),
**characterized in that** the sealing element (17) has a first attachment region (27) for attaching the sealing element (17) to the latching element (13) and a second attachment region (22) for attaching the sealing element (17) to the housing (10),
wherein the sealing element (17) has, between the first attachment region (27) and the second attachment region (22), an elastically deformable connecting region (30) by way of which the first attachment region (27) is movable relative to the second attachment region (22) when a pivot movement of the latching element (13) occurs, wherein the connecting region (30) of the sealing element (17) is U-shaped.

2. Plug connector (100) according to Claim 1, **characterized in that** the first attachment region (27) has at least one rib (28) that engages in a receiving groove (29) formed in the latching element (13).

3. Plug connector (100) according to Claim 1 or 2, **characterized in that** the second attachment region (22) has at least one rib (23, 24) that engages in a receiving groove (25, 26) formed in the housing (10).

4. Plug connector (100) according to Claim 3, **characterized in that** the second attachment region (22) has a first rib (23) and a second rib (24) arranged below the first rib (23), wherein the first rib (23) engages in a first receiving groove (25) formed in the housing (10) and the second rib (24) engages in a second receiving groove (26) formed in the housing (10).

5. Plug connector (100) according to one of Claims 1 to 4, **characterized in that** the sealing element (17) is arranged on the latching element (13) at a distance from a bearing pin (20) formed on the latching element (13).

## Revendications

1. Connecteur enfichable (100), avec :
un carter (10) ;
un élément de verrouillage (13) qui est disposé au niveau du carter (10) de façon à effectuer un mouvement de pivotement et qui permet de fixer le connecteur enfichable (100) à un contre-connecteur enfichable ; et
un élément d'étanchéité (17) qui est disposé entre l'élément de verrouillage (13) et le carter (10) ;
**caractérisé en ce que** :
l'élément d'étanchéité (17) comporte une première zone de fixation (27) pour la fixation de l'élément d'étanchéité (17) à l'élément de verrouillage (13) et une deuxième zone de fixation (22) pour la fixation de l'élément d'étanchéité (17) au carter (10) ;
l'élément d'étanchéité (17) comportant entre la première zone de fixation (27) et la deuxième zone de fixation (22) une zone de liaison (30) déformable de façon élastique à l'aide de laquelle la première zone de fixation (27) peut être déplacée par rapport à la deuxième zone de fixation (22) en cas de mouvement de pivotement de l'élément de verrouillage (13), la zone de liaison (30) de l'élément d'étanchéité (17) étant réalisée en forme de U.

2. Connecteur enfichable (100) selon la revendication 1, **caractérisé en ce que** la première zone de fixation (27) comporte au moins un étai (28) qui s'engrène dans une rainure de logement (29) disposée au niveau de l'élément de verrouillage (13).

3. Connecteur enfichable (100) selon la revendication 1 ou 2, **caractérisé en ce que** la deuxième zone de fixation (22) comporte au moins un étai (23, 24) qui s'engrène dans une rainure de logement (25, 26) réalisée au niveau du carter (10).

4. Connecteur enfichable (100) selon la revendication 3, **caractérisé en ce que** la deuxième zone de fixation (22) comporte un premier étai (23) et un deuxième étai (24) disposé en dessous du premier étai (23), le premier étai (23) s'engrenant dans une première rainure de logement (25) réalisée au niveau du carter (10) et le deuxième étai (24) s'engrenant dans une deuxième rainure de logement (26) réalisée au niveau du carter (10).

5. Connecteur enfichable (100) selon l'une quelconque des revendications 1 à 4, **caractérisé en ce que** l'élément d'étanchéité (17) est disposé au niveau de l'élément de verrouillage (13), à une certaine distance d'un axe de palier de roulement (20) réalisé au niveau de l'élément de verrouillage (13).
